# EUROPEAN PATENT APPLICATION

(11) **EP 4 570 769 A1**
(43) Date of publication of application: **18.06.2025**
(21) Application number: 23217271.8
(22) Date of filing: 15.12.2023
(51) Int. Cl.: C03C 3/091, C03C 3/118, C03C 8/24, C03C 8/14, C03C 14/00, G01K 7/00

(54) **LEAD FREE COMPOSITION FOR ELECTRICAL COMPONENTS**

(71) Applicant: TE Connectivity Smart Grid GmbH, 44227 Dortmund (DE)
(72) Inventor: SIRTL, Horst, 44227 Dortmund (DE)
(74) Representative: Grünecker Patent- und Rechtsanwälte PartG mbB

(57) **Abstract**

A lead free composition (40) for manufacturing electrical components (1) is disclosed, including: 14.2 to 27.6% by weight B₂O₃; 3.6 to 8.1% by weight CaO; 8.1 to 13.6% by weight Al₂O₃; 2.8 to 9.5% by weight Na₂O; and 40.5 to 54.5% by weight SiO₂. The lead free composition (40) can be used in the assembly and/or strain relief of an electrical component (1) such as a sensor, such as a Pt based temperature sensor. The lead free composition can be mixed with 0.5-50% by weight glass- or ceramic- or glass-ceramic-powder with a melting temperature above 900°C to form a composite material (50) usable as a coating (20) for the an electrical component, to fix electrical leads (10) to the electrical component (1).

## Description

Composite materials are used in electrical devices such as for physical support of components. Composite materials can have tunable properties, such as coefficients of expansion, which can be altered based on composition. Nontoxic and inexpensive materials that have stable properties to support long lifetime components are desired.

For some electrical components, assembly and/or strain relief is achieved by supporting, coating, and/or embedding the electrical components with a suitable material. For example, the electrical leads of Pt based temperature sensors are often coated with a glass material that includes lead. However, lead has detrimental environmental effects, and is toxic to humans and animals.

There is a need for lead-free materials for electrical components, such as to avoid toxic environmental effects.

Herein is disclosed a lead free composition, for electrical components, which can be used for mounting of electrical leads, such as to a sensor, e.g. a temperature sensor. The lead free composition can alternatively/additionally provide strain relief and/or low strain, e.g. at an oxide-oxide, metal-glass, and/or metal-oxide interface. Alternatively/additionally, the lead free composition described herein can be mixed with a glass- or ceramic- or glass-ceramic-powder with a melting temperature above 900°C to make a composite material that can be used for electrical components. For example, the composite material can be used to protect the electrical leads of sensors, such as the electrical leads of Pt based temperature sensors.

A lead free composition is disclosed, which includes:
14.2 to 27.6% by weight B₂O₃;
3.6 to 8.1% by weight CaO;
8.1 to 13.6% by weight Al₂O₃;
2.8 to 9.5% by weight Na₂O; and
40.5 to 54.5% by weight SiO₂.

A material made from the lead free composition above avoids the adverse environmental impact of lead, and is in compliance with possible legal regulations banning lead. The lead free composition described herein can fulfill other requirements, for example requirements regarding thermal performance and stability to temperature.

The lead free composition can also include the following further developments and embodiments, which are independent of each other and can be combined arbitrarily, as desired.

In an embodiment, the composition includes 19.7 to 21.7% by weight B₂O₃. This range of boron can contribute to longevity and/or resistance to thermal shock, even when diluted by a factor of up to two. Borosilicate glasses, for example, can have low coefficients of thermal expansion.

In an embodiment, the composition includes 3.6 to 7.0% by weight CaO, as described herein. This range of CaO can have desirable electrical and/or mechanical properties.

In an embodiment, the composition includes 8.1 to 11.2% by weight Al₂O₃, as described herein. This range of Al₂O₃ is shown to have desirable electrical and/or mechanical properties.

In an embodiment, the composition includes 4.3 to 8.7% by weight of the sum of BaO, CaO, and MgO; as described herein. This range of composition of group 2 elements can have desirable electrical and/or mechanical properties.

In an embodiment, the composition includes 4.3 to 7.0% by weight of the sum of CaO and MgO; as described herein. This range of composition of group 2 elements which have smaller ionic radii than Ba⁺⁺ can have desirable electrical and/or mechanical properties.

In an embodiment, the composition includes 0.0 to 0.7% by weight MgO, as described herein. This range of composition of MgO can have desirable electrical and/or mechanical properties.

In an embodiment, the composition includes 0.0 to 0.9% by weight of Li₂O. This range of composition of Li₂O is believed to reduce the deleterious effects of lithium ion mobility, particularly in electrical applications.

In an embodiment, the composition includes less than 0.05% by weight of ZrO₂, Fe₂O₃ and SO₃⁻. Low amounts of these constituents is believed to contribute to better chemical stability, particularly for electrical applications, including electrical applications involving measurement, e.g. temperature measurement by Pt sensors.

In an embodiment, the composition includes 0.0 to 1.9% by weight of CoO, CoAl₂O₄, or CoTiO₄. Cobalt can provide color, as desired, e.g. for aiding in visualizing the component. Low amounts of cobalt can contribute to better chemical stability, particularly for electrical applications, including electrical applications involving measurement, e.g. temperature measurement by Pt sensors.

In an embodiment, the composition includes:
0 to 3.6 weight % K₂O;
0 to 4.4% by weight MgO;
0 to 1.7 weight % BaO;
0 to 0.3 weight % SrO; and
0 to 3.3 weight % ZnO.

The amounts of K, Mg, Ba, Sr, and Zn (as the oxides) above can contribute to desirable chemical and/or thermal stability.

Herein, a composite material is disclosed, which includes 50 to 99.5 % by weight of the lead free composition described herein, such as the lead free compositions described above, and 0.5-50% by weight glass- or ceramic- or glass-ceramic-powder with a melting temperature above 900°C. The glass- or ceramic- or glass-ceramic-powder can include Al₂O₃, MgO, MgO-Al₂O₃-spinel, ZrO₂, BaO, or TiO₂ or a mixture thereof. It is believed that these compositions can provide a wider range of application in electrical devices such as sensors. For example, it can be possible to adjust the thermal expansion coefficients and/or wetting characteristics of the resulting composite material by mixing the lead free compositions with other components (glass- or ceramic- or glass-ceramic-powders, such as those named above). The composite material can be amorphous and/or glassy, for example.

The lead free composition described herein and/or the composite material described herein can be stable at a working temperature of up to 600 °C; optionally, the composition or composite material is stable at a working temperature of 650 °C for at least 100 hours. Stable or stability in this context means that the glass composition will not significantly influence a sensor characteristic negatively; for example in case of a Pt temperature sensor, no significant resistance change or change in temperature coefficient of resistance (TCR) will occur.

Herein is disclosed a sensor, such as a Pt based temperature sensor, including at least two leads, and a coating that includes the lead free composition and/or the composite material described herein, such as described above. The leads can be made from a non-precious metal or alloys thereof, such as nickel or nickel alloys. The lead free composition and/or composite material can provide a strain-relief section that can cover and/or surrounds the leads. For example, the coating of the sensor is an amorphous solid of the composite material described herein, such as a solid formed of a mixture of 85-90.% of any of the lead free compositions described herein and 10.-15% Al₂O₃.

Herein, "stable" can furthermore refer to a chemical and/or mechanical stability. For example, stability can mean that the changes in the chemical composition, electrical property, and/or the mechanical property is less than 10%, less than 3%, less than 1%, or less than 0.3%.

Possible advantages of the examples described herein are:
- Reduced negative environmental impact by being lead free;
- Fulfilling regulative compliance requirements;
- Improved greenhouse gas footprints due to potentially lower process temperatures;
- Ability to maintain stable electrical characteristics (e.g. of RTD sensors, such as R0 and/or α), for example when exposed to temperature changes
- Ability to be used with inexpensive nonprecious metals, such as electrical leads of nonprecious metals (e.g. nickel and nickel alloys)
- Adjustable thermal expansion coefficients
- Resistance to acidic and/basic agents used in production process
- Better flowing properties of molten compositions
- Higher mechanical resistance, hardness.

The compositions described herein can be made by mixing at least one commercially available composition comprising several components with at least one further material and/or at least one further commercially available composition.

Herein, "including" can mean "comprising" (e.g. the composition and/or material can include additional components) or "consisting of" (the composition and/or material does not include any other materials than the ones stated, apart from unavoidable impurities).

Herein "and/or" means at least one of the listed elements. For example, "A and/or B" means: only A; only B, at least A; at least B; or at least A and B. For example, "X, Y, and/or Z" means: only X; only Y; only Z; at least X; at least Y; at least Z; only X and Y; only X and Z; only Y and Z; only X, Y, and Z; at least X and Y; at least X and Z; at least Y and Z; or at least X, Y, and Z. Herein an "(s)" at the end of a word means one or more; for example an electrical lead (s) is one or more electrical leads.

Herein a "coating" can be a strain relieving coating. Herein, a coating may cover part or all of an electrical structure or electrical assembly; the structure or assembly possibly including: one or more electrical leads, optionally in combination with a film such as Pt film.

Herein, "wire coating" can be a precious metal coating on a wire, such as an electrical lead, in a thickness range of approximately 80-500 nm or 80-150 nm.

The level of impurities of compositions and/or materials described herein can be such that the impurities have a negligible influence on the desired properties, such as electrical and/or mechanical properties, e.g. properties that quantify drift of temperature coefficient of resistance. Maximum levels of impurities can be 3 weight %, 1 weight %, 0.5 weight % or 0.1 weight % relative to the total weight.

For tolerances and rounding, the general convention in the scientific and technical literature is applied: the last decimal place of a numerical value indicates its degree of accuracy. Where no other error margins are given, the margin of error is ascertained by applying the rounding-off convention to the last decimal place. For example, for 20. weight %, the error margin is 19.5 (inclusive) - 20.5 weight % (exclusive); in other words from 19.5% to 20.5% wherein the lower bound includes the endpoint of 19.5% and the upper bound, 20.5%, does not include the endpoint of 20.5.

Herein, "x weight %" or "x % [w/w]" means that the corresponding material has a weight that is x % or x out of 100 of the weight of all the materials in combination. X% by weight is used interchangeably with x weight % and x% weight. Herein, unless indicated otherwise, % compositions are given as % by weight. Herein, weight and mass (e.g. mass% and weight%) are used interchangeably.

Herein "lead free composition" may be used interchangeably with "composition," as apparent from the context. "Composite material" is used to describe a material that includes any of the lead free compositions described herein.

Herein, chemical formulas may be written without subscripts, which are implied; for example, Al₂O₃ may be written for Al₂O₃.

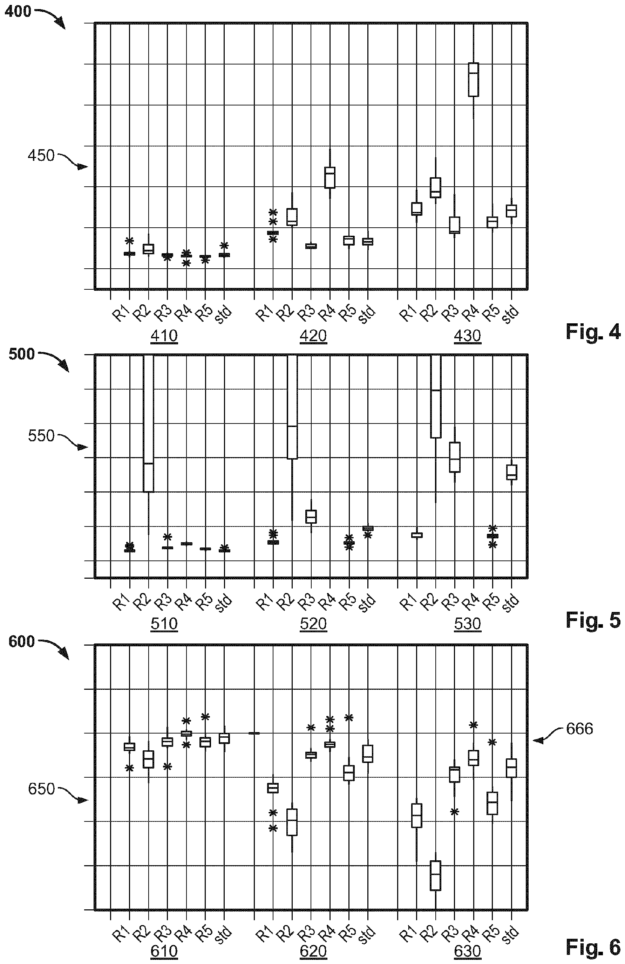

Herein boxplots are shown. Boxplots show asterisks to indicate statistical outliers. Averages, medians (shown with horizontal lines), and/or spreads (shown with vertical lines, e.g. related to standard deviations) can be understood by a skilled person by interpreting the boxes, whiskers (vertical lines illustrative of statistical spread of measurements), and horizontal lines of the boxplots shown herein. Herein, the test results shown in Figs. 5-9 were on Pt-based RTDs using electrical leads made of nickel or a nickel alloy, or nickel or nickel alloy with a flash gold coating. The flash gold coating of the wire was in the range of 80 to 150 nanometer.

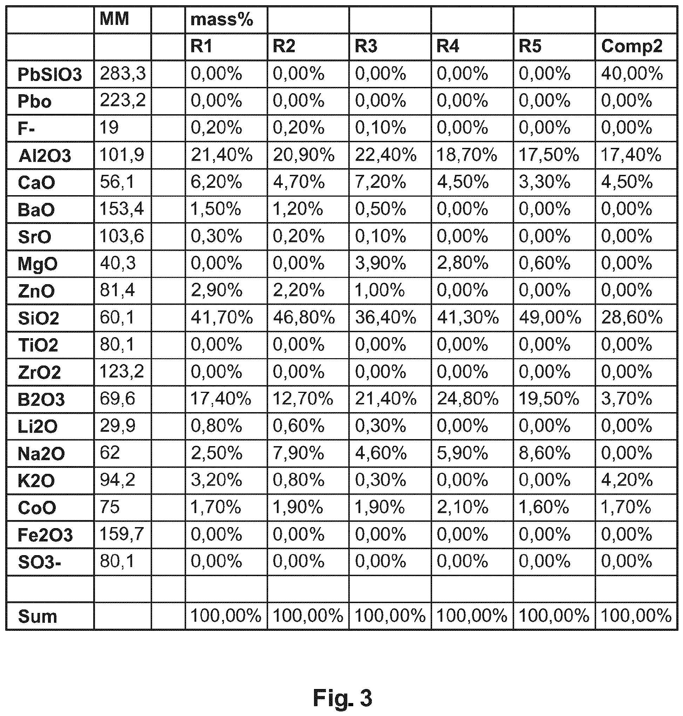

Herein, the composite material which includes lead, used for tests in Figs. 4-9, is equivalently referred to as the standard (std), comparative example, and comp2 (see Fig. 3).

In the following, the embodiments are described by means of embodiments with reference to the attached Figures. In the Figures, elements which correspond to one another in terms of structure and/or function are provided with the same reference signs.

The combinations of features shown and described in the individual embodiments are for explanatory purposes only. A feature of an embodiment can be omitted if its technical effect is not important for a particular application and/or particular advantage. Conversely, according to the above explanations, a further feature can be added to an embodiment if its technical effect is advantageous or necessary for a particular application.

In the following, several examples are described.

In the figures:
- Fig. 1: shows a schematic perspective view of a Pt based temperature sensor with a strain relieving part made from a composition according to an embodiment;
- Fig. 2: shows compositional data of several lead free compositions according to embodiments;
- Fig. 3: shows compositional data of several composite materials according to embodiments;
- Fig. 4: shows a boxplot of change in resistance, ΔR0%, for composite material samples used in Pt100 temperature sensors, according to embodiments;
- Fig. 5: shows a boxplot of change in resistance, ΔR0%, for composite material samples used in Pt1000 temperature sensors, according to embodiments;
- Fig. 6: shows a boxplot of the change in the temperature coefficient of resistance (δα) for Pt100 samples using composite materials for the respective coatings, according to embodiments;
- Fig. 7: shows a boxplot of the change in the temperature coefficient of resistance (δα) for Pt1000 samples using composite materials for the respective coatings, according to embodiments;
- Fig. 8: shows a boxplot of pulling force for various samples, according to embodiments; and
- Fig. 9: shows a boxplot of pulling force for various samples, according to embodiments.

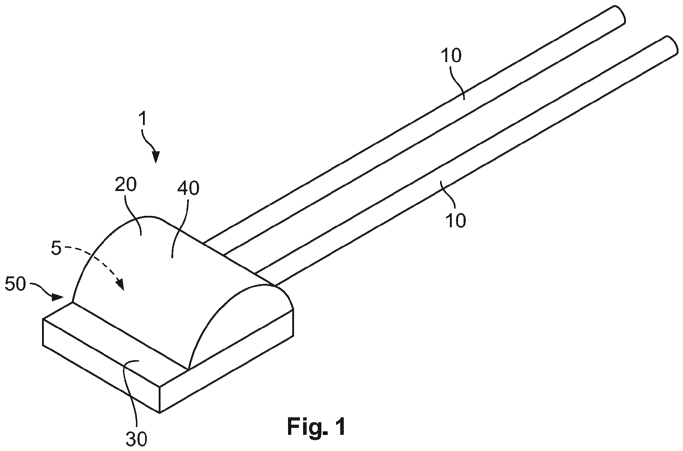

Fig. 1 shows an exemplary use of a lead free composition 40 according to an embodiment. The lead free composition 40 can be used in a coating 50 which can be used for strain relief of an electrical component 1, such as a sensor. The electrical component 1 can be a temperature sensor, e.g. a resistance temperature detector (RTD) and/or Pt based temperature sensor.

The properties of the electrical component can be specified in norms or standards. For example, the Pt-100 and Pt-1000 are known in the art. An electrical structure 5, such as a Pt structure, can be present, e.g. on a substrate 30. The dimensions and configuration of the electrical structure (e.g. Pt structure) can be such that desired resistance properties are achieved.

The structure 5 can be supported on a surface of the substrate 30. The substrate can be an oxide, such as alumina (Al₂O₃), MgO, stabilized or unstabilized Zirconia (ZrO₂), barium oxide (BaO), at least mostly SiO₂ (such as a silica glass, silica, or quartz), and/or TiO₂, or a mixture thereof. Alternatively/additionally, the substrate can have such an oxide surface. Alternatively/additionally, the surface may be an amorphous one like a glass finish.

The structure 5 can be added to the substrate 30 by several methods. For example, a layer of the material of the structure 5 can be grown and/or deposited on the substrate 30 by physical vapor deposition (PVD) or by chemical methods, including wet chemical methods. The structure 5 can be a layer on the substrate 30, which can be patterned and/or partially removed to achieve a desired dimension and configuration, for example by etching and/or laser treatment. A pre-formed structure with desired dimension and configuration can, alternatively/additionally, be applied to the substrate 30 and the leads 10.

The structure 5 can be electrically connected to leads 10, e.g. conductively, which may be used to couple to an external device that can for example be used to measure resistance. The leads 10 can be made from materials that are different from platinum. Leads 10 can be made from non-precious metals, including alloys, to keep the costs low. The leads 10 can be connected to the structure by various methods, e.g. by welding or soldering or by a suitable bonding process. The leads 10 can include nickel and/or nickel alloys.

The leads 10 can have a core/cladding structure, such as with a metal coating over a core. The core may be a first metal material and the core a second metal material. For example, one of the first and second metal materials is mainly a precious metal material such as gold, and the other is a non-precious metal material, e.g. nickel or alloy thereof. The wire coating can be the precious metal material of the two materials. For example, the leads 10 have a nickel or nickel alloy core, and a gold coating, such as a flash gold coated Ni or Ni-alloy wire, e.g. of 80-500 nm thickness.

A coating 50, including a composite material 20 as described herein, can be present at the structure 5, the leads 10, and/or the region where the leads 10 meet the structure 5. The electrical component 1 can include the coating 50.

The coating 50 can at least partially coat any one or more of: a surface of the substrate 30, the structure 5, the leads 10, and/or the region where the leads 10 meet the structure 5. For example, the structure 5 and/or the leads 10 can be embedded at least partially in the coating 50. The coating 50 can be on the surface of the structure 5 and/or substrate 30; e.g. the coating 50 can cover at least parts of the substrate 30.

The coating 50 can cover the structure 5 entirely, and the region where the leads 10 meet the structure 5, and optionally at least part of the substrate 30, and at least part of the leads 10. Covering at least the structure 5 and leads 10 at the structure 5 can protect the electrical component 1 from the environment.

The coefficients of thermal expansion of the coating 50, the substrate 30, and/or the structure 5 can be matched, i.e. they can be equal or similar, for example with less than 10% or less than 5% difference. The leads 10 can also have a coefficient of thermal expansion which is close to that of the coating 50, e.g. within a 10% or 5% difference.

The coating 50 can include the lead free compositions and/or composite materials described herein. The coating 50 can be made upon solidification of an at least partially molten lead free compositions and/or composite materials described herein. The molten lead free compositions and/or molten composite materials can be applied to the leads 10, substrate 30, and/or structure 5 to form the coating 50.

The lead free compositions described herein can be made by mixing together powdered precursors that may be commercially available. The lead free compositions and/or composite materials described herein can be heated to a molten state, which may be viscous or gel-like. After solidification, such as to form the coating 50, the lead free composition and/or composite material 20 can have a glass or ceramic like structure. Alternatively/additionally, the lead free compositions and/or composite materials described herein can be applied to the substrate 30 and the leads 10 as an at least partly pre-formed part (e.g. partly molten) with desired dimension and configuration, to form the coating 50.

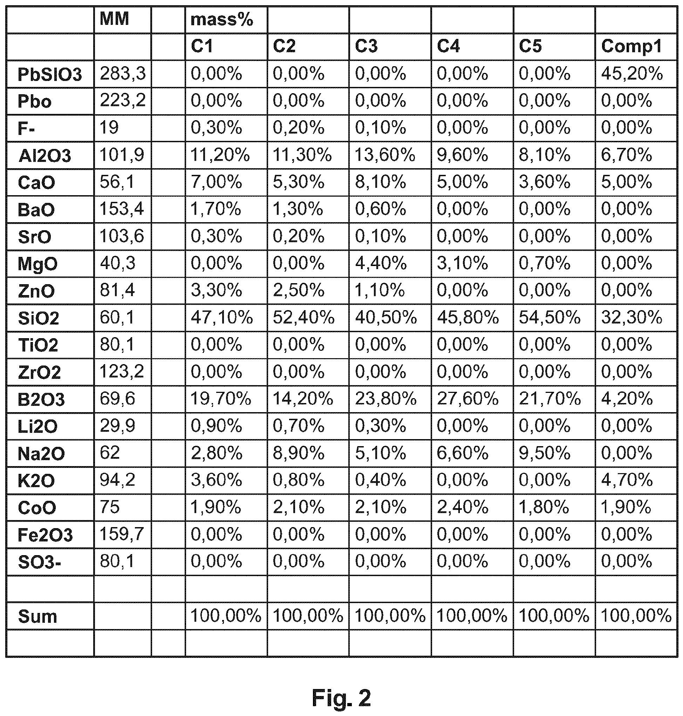

Fig. 2 shows a table of compositional data for lead free compositions C1, C2, C3, C4, and C5, according to embodiments; and a lead containing comparative example (Comp1).

The lead free compositions of Fig. 2 can be used to make a range of composite materials which are also free of lead. For example, powders of the lead free compositions can be mixed with glass- or ceramic- or glass-ceramic-powders. Glass- or ceramic- or glass-ceramic-powders with a melting temperature above 900°C can be used to make composite materials. Alternatively/additionally, glass- or ceramic- or glass-ceramic-powders can be Al₂O₃, MgO, MgO-Al₂O₃-spinel, ZrO₂, BaO, or TiO₂ or mixtures thereof.

A lead free composition can include: 14.2 to 27.6% by weight B₂O₃; 3.6 to 8.1% by weight CaO; 8.1 to 13.6% by weight Al₂O₃; 2.8 to 9.5% by weight Na₂O; and 40.5 to 54.5% by weight SiO₂.

Such a range of composition can be used to make a desirable composite material, such as by making a mixture of 88.5-90.% by weight of the lead free composition and 10.-11.5% Al₂O₃. The resulting composite material can have desirable properties, such as to be used as a coating 50 for an electrical component, such as a Pt- based temperature sensor.

Fig. 3 shows a table of compositional data of composite materials, R1, R2, R3, R4, and R5, according to embodiments; and a lead containing comparative example (Comp2). The composite materials R1, R2, R3, R4, and R5 are free of lead. The composite materials R1, R2, R3, R4, and R5 can be obtained from respective lead free compositions C1, C2, C3, C4, and C5, for example by mixing the respective lead free compositions with a proportion of Al₂O₃ that is derivable from the tables of Fig. 2 and 3. For example, R1 can be obtained by mixing 11.5% Al₂O₃ and 88.5% C1; and R5 can be obtained by mixing 10.2 to 10.3% Al₂O₃ and remainder C5.

It is believed that a composition of 19.7 to 21.7% by weight B₂O₃ of the lead free composition can contribute to longevity and/or resistance to thermal shock, e.g. of the resulting coating 50, even if the lead free composition is diluted by a factor of up to two, with glass- or ceramic- or glass-ceramic-powders (e.g. those having a high melting temperature of 900°C). Borosilicate glasses, for example, can have low coefficients of thermal expansion.

Alternatively/additionally, the lead free composition can include 3.6 to 7.0% by weight CaO. This range of CaO can have desirable electrical and/or mechanical properties.

Alternatively/additionally, the lead free composition can include 8.1 to 11.2% by weight Al₂O₃. This range of Al₂O₃ can have desirable electrical and/or mechanical properties.

Alternatively/additionally, the lead free composition can include 4.3 to 8.7% by weight of the sum of BaO, CaO, and MgO. This range of composition of group 2 elements can have desirable electrical and/or mechanical properties.

Alternatively/additionally, the lead free composition can include 0.0 to 0.9% by weight of Li₂O. This range of composition of Li₂O is believed to reduce the deleterious effects of mobility of lithium ions, particularly in electrical applications.

Alternatively/additionally, the lead free composition can include less than 0.05% by weight of ZrO₂, Fe₂O₃ and SO₃⁻. Low amounts of these constituents is believed to contribute to better chemical stability, particularly for electrical applications, including electrical applications involving measurement, e.g. temperature measurement by Pt sensors.

Alternatively/additionally, the lead free composition can include 0.0 to 5.0% by weight of CoO, CoAl₂O₄, or CoTiO₄. Cobalt, such as a small amount (e.g. 0.1 to 1.9%) can provide color, as desired, e.g. for aiding in visualization.

Alternatively/additionally, the lead free composition can include 0 to 3.6 weight % K₂O; 0 to 4.4% by weight MgO; 0 to 1.7 weight % BaO; 0 to 0.3 weight % SrO; and 0 to 3.3 weight % ZnO. The listed amounts, here, of K, Mg, Ba, Sr, and Zn (as the oxides) can contribute to desirable chemical and/or thermal stability.

The lead free compositions described herein can be used for temperature sensors, for example.

A resistance temperature detector (RTD) can utilize a predictable response of resistance to temperature. The response may be modeled as R = R0(1 + αΔT); with R0 being the resistance at a reference temperature, e.g. 0°C. The measured resistance R depends on the reference temperature resistance and the deviation in temperature therefrom (ΔT), and the proportionality constant (α), or temperature coefficient of resistance (TCR).

In more detail, Pt-RTDs can be modeled with a polynomial expression R=R₀(1+A*T+B*T²); with international standardized coefficients A and B for temperatures above 0°C. The TCR α is the medium slope of the characteristic polynomial expression between 0°C and 100°C. It can be calculated with the expression α =(R₁₀₀-R₀)/(R₀*100°C). Standardized Pt-RTDs TCR-Values are for example 3850ppm/K (DIN-EN-IEC 60751) or 3920ppm/K (according to JIS C 1604).

RTD sensors can be made so as to have a R0 of 100 ohms or 1000 ohms at 0°C, for example.

In order to test RTDs made from various coatings, the RTD can be subjected to static or even cyclic thermal stress, and subsequently R0 (the resistance measured at the reference temperature such as 0°C) is measured after the applied thermal stress. The change in R0, calculated as ΔR0/R0 or more detailed (R0_{after Stress}-R0_{unstressed})/R0 _{unstressed}), normalized to percentage values (ΔR0%), can then be plotted. An ideal material would have no change in R0 after the applied stress, meaning ΔR0/R0=0. In other words, an ideal Pt100 sensor would measure 100 ohms at 0°C, irrespective of its thermal history; an ideal Pt1000 sensor would always measure 1000 ohms at 0°C. Additionally, no change in TCR will occur for an ideal Pt-Sensor irrespective of its thermal history. Resistive change (ΔR0%) to real sensors occurs, for example due to thermal stress applied leading to mechanical stress applied to the resistive element. Alternatively/additionally, thermally induced diffusion of nearby material (e.g. other metal atoms diffuse into the lattice of the resistive element, the other metal atoms coming from the wire or the material of the sensor component) can cause resistive change. Greater change is expected with higher thermal load (temperature over time).

Fig. 4 shows a boxplot of change in resistance for composite material samples used in temperature sensors, according to embodiments. Three sets 410, 420, 430, of data are shown for samples R1-R5, and the standard (std). The vertical axis 450 is the change in R0 as a percent (ΔR0%), and increases in the upward direction. The samples are Pt100 RTDs that are made from the lead free composite materials R1, R2, R3, R4, and R5, and the comparative example (std, which includes lead) which are described in Fig. 3 (comp2).

The leftmost group 410 of samples of Fig. 4 show the change in R0 (ΔR0%) of Pt100 RTDs made from coatings of the respective composite materials, R1-R5 and std, after 100 hours at 600°C.

For each sample R1, R2, R3, R4, R5, std, of the first set 410, there is the least ΔR0% (within 0.2%), compared to the second and third sets, 420, 430. The second set of samples 420, in the middle of the boxplot 400, represent the resulting ΔR0% after the temperature is raised to 600°C for 500 hours; and the third set 430 represents the resulting ΔR0% after the temperature is raised to 600°C for 1000 hours. The highest average and median ΔR0% of all samples illustrated in Fig. 4 is less than 1%.

Fig. 5 shows a boxplot of change in resistance for composite material samples used in temperature sensors, according to embodiments. Three sets 510, 520, 530, of data are shown for samples R1-R5, and the standard (std) in the boxplot 500 for Pt1000 based samples. The vertical axis 550 is the change in R0 as a percent (ΔR0%), and increases in the upward direction. The samples are PT1000 RTDs that are made from the lead free composite materials R1, R2, R3, R4, and R5, and the std (which includes lead) which are described in Fig. 3.

The leftmost group 510 of samples of Fig. 5 show ΔR0%, the change in R0 as a percent, of Pt1000 RTDs made from coatings of the respective composite materials, R1-R5 and std, after 100 hours at 600°C.

The second set of samples 520, in the middle of the boxplot 500, represent the resulting ΔR0% after the temperature is raised to 600°C for 500 hours; and the third set 530 represents the resulting ΔR0% after the temperature is raised to 600°C for 1000 hours.

Comparison of the Pt1000 samples of Fig. 5 to the Pt100 samples of Fig. 4 shows that the Pt1000 samples are more susceptible to heat induced damage. The ΔR0% of the Pt1000 sample using R2 as the coating exhibits a wide statistical spread of R0 after 100 hours (R2 of the leftmost group 510 in Fig. 5). The Pt1000 sample using R4 for the coating, after 500 hours, has a ΔR0% that is off scale (not shown in the samples 520 of Fig .5).

After 1000 hours at 600°C, Pt1000 samples using R1 or R5 as the coating (see rightmost group 530 in Fig. 5) still show less than 0.2% in ΔR0%, which is less than that shown by the standard sample, std (of the rightmost group 530).

Fig. 6 shows a boxplot 600 of change in the temperature coefficient of resistance (δα) for Pt100 samples using as a coating the composite material samples of Fig. 3. Three sets 610, 620, 630 of data are shown for samples R1-R5, and the standard (std). The results of Pt100 based samples are shown in Fig. 6. The vertical axis 650 is the change in the temperature coefficient of resistance (δα) in ppm/K, and increases in the upward direction. Zero 666 is marked in the graph of Fig. 6, showing where δα=0.

The samples are PT100 RTDs that are made from the lead free composite materials R1, R2, R3, R4, and R5, and the std (which includes lead) which are described in Fig. 3.

The leftmost group 610 of samples of Fig. 6 show the δα after 100 hours at 600°C. The second set of samples 620, in the middle of the boxplot 600, represent the resulting δα after the temperature is raised to 600°C for 500 hours; and the third set 630 represents the resulting δα after the temperature is raised to 600°C for 1000 hours. It is generally seen from Fig. 6 that δα deviates negatively with heat stress. The highest absolute δα is less than 20 ppm/K, for sample R2 after 1000 hours at 600°C.

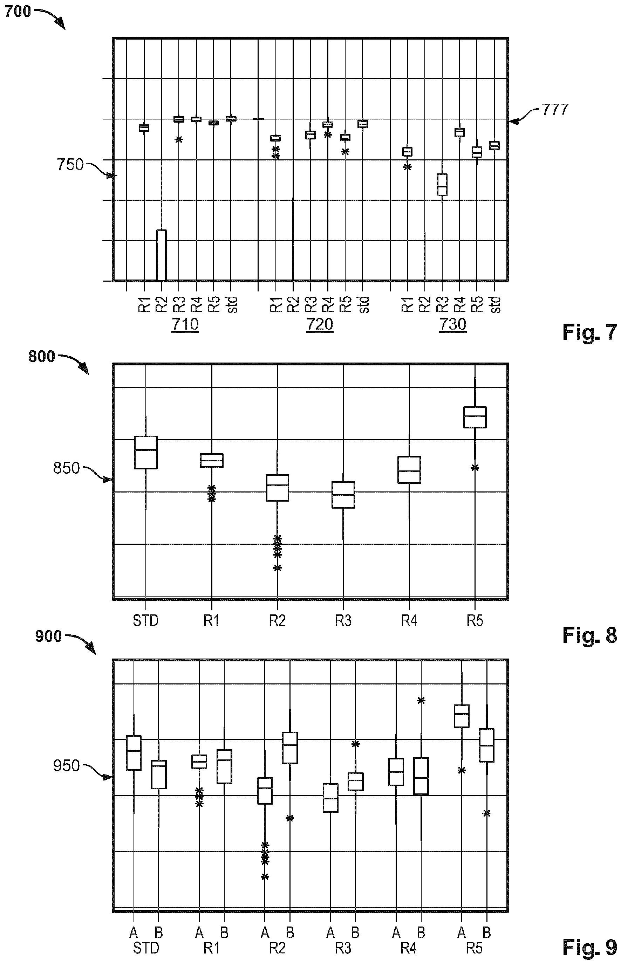

Fig. 7 shows a boxplot of change in resistance for composite material samples used in temperature sensors, according to embodiments. Three sets 710, 720, 730, of data are shown for samples R1-R5, and the standard (std), in the boxplot 700 for Pt1000 based samples, shown in Fig. 7. The vertical axis 750 is the change in the temperature coefficient of resistance (δα) in ppm/K, and increases in the upward direction. Zero change 777 is marked in the graph of Fig. 7, where δα=0. The samples are PT1000 RTDs that are made from the lead free composite materials R1, R2, R3, R4, and R5, and the std (which includes lead) described in Fig. 3.

The leftmost group 710 of samples of Fig. 7 show the respective δα after 100 hours at 600°C for each type of sample R1, R2, R3, R4, R5, and std. The second set of samples 720, in the middle of the boxplot 700, represent the resulting δα after the temperature is raised to 600°C for 500 hours; and the third set 730 represents the resulting δα after the temperature is raised to 600°C for 1000 hours. It is generally seen from Fig. 7 that δα deviates negatively with heat stress. Comparing Fig. 7 and Fig. 6, it is again seen that Pt1000 samples are more sensitive to heat stress than Pt100 samples.

Fig. 8 illustrates a boxplot of pulling force for various samples. The boxplot 800 has a vertical axis 850 in units of force, which increases going upward. The minimum median amount of force to remove the electrical lead(s) 10 from the electrical component 1 occurs for R3, which is about 30% less than the force for the standard sample (std). The sample based on R1 is statistically indistinguishable from the standard sample, and R5 shows a statistically significant stronger pull force than the standard sample. The composite material 20 of sample R5 firmly fixes the leads 10 to the electrical component 1, as deduced from Fig. 8. Additionally, the electrical characteristics of R5 are also favorable, as seen in Figs. 4-7. More generally, a composition range defined by the compositions of R1 and R5 has favorable fixing properties, as seen in Fig. 8. Alternatively/additionally, the compositional range of R1 and R5 has favorable RTD stability, as seen with parameters ΔR0% and δα, shown in Figs. 4-7. The composite materials R1 and R5 are derived from lead free compositions C1 and C5, respectively (see Figs. 2 and 3).

Fig. 9 illustrates a boxplot of pulling force for various samples before and after additional thermal stress. The boxplot 900 has a vertical axis 950 in units of force, which increases going upward. For each sample type there are boxplots, labeled A and B (e.g. for each of STD, R1, R2, R3, R4, and R5). The A measurements are before the thermal stress (and are also shown in Fig. 8), and the B measurements are after a firing cycle at 780 °C. Results are favorable for R5, which has the highest pulling force (before the firing cycle). The coating made from R5 robustly fixes the leads 10 to the electrical component 1.

It is expected that there will be a pressing need in the future for lead free materials, including glasses, for applications that have previously relied upon using lead. Lead containing glasses have been used especially for their moderate or relatively low melting temperatures, e.g. in manufacturing, and/or to achieve a desired coefficient of thermal expansion, especially but not limited to applications involving alumina substrates.

It is desirable to find, for Pt-temperature sensors, lead free formulations that can work at at least 300°C or up to 500°C, and possibly 600°C and beyond at least for limited durations.

Existing lead free glass formulations can include metal oxides which negatively impact Pt-sensors. Often, the melting point of lead-free glasses would limit sensors usable temperature range. Some Barium-Zinc-containing glasses are less chemical stable in liquid acid environment, which may forbid their use such as due to incompatibility with final plating of the electrical lead wires.

Lead free glass formulations described herein can have long term stability above 500°C and even beyond 600°C for a limited time, which can be attributed to higher glass-transition-temperatures of the composite formulations compared to the mixture of pure glasses or pure glass powders from systems with lower glass-transition-temperature.

Soda lime glasses can be too electrically conductive or not electrically insulating enough at higher temperatures and therefore not desirable or not usable. Lead free pure borosilicate glasses can be too low in expansion, while barium-aluminium-silicate-glasses are mainly too high.

Sodium ions in glasses are considered to contribute to electrical conductivity, especially at higher temperatures due to the low ionic size of Na⁺. However, using alkaline free glasses may not be possible due to the higher melting temperatures needed. If larger Pb-ions are substituted with other ions such as significantly smaller Ca and Mg ions, the conductivity can be reduced, e.g. at least in the temperature range up to glass transition temperature. Exploiting a mixed alkaline/earth-alkaline effect (e.g. using sodium and potassium together) may also aid in reducing conductivity, as desired.

As shown herein, drift stability for sensor components after 1000h storage at 600°C can be comparable to sensor components that use lead in glass. In some cases, sensor components using lead free compositions are more stable compared to sensor components that use lead in glass.

It is possible to utilize the lead free compositions described herein for applications other than Pt based temperature sensors, such as where an oxide/metal, glass/metal, or glass/metal/ceramic bond or seal is desired.

The glass formulations described herein can allow Pt-RTD's, and other sensors, to be usable at up to 500°C or 600°C, and beyond, e.g. for sensors that include nonprecious metals like nickel in the electrical leads. The use of nonprecious metals can reduce costs. The lead free compositions and composite materials described herein can be used for fixing electrical leads to substrates, such as substrates that include a metal oxide component. Nonprecious metal leads can be used in combination with the lead free compositions and composite materials, described herein, such as to reduce costs in the manufacturing of electrical components such as sensors.

The examples described herein are for illustrative purposes.

### REFERENCE NUMERALS

- 1: electrical component
- 5: structure
- 10: leads
- 20: composite material
- 30: substrate
- 50: coating
- 400: boxplot for ΔR0% of Pt100 samples
- 410: first set
- 420: second set
- 430: third set
- 450: vertical axis
- 500: boxplot for ΔR0% of Pt1000 samples
- 510: first set
- 520: second set
- 530: third set
- 550: vertical axis
- 600: Boxplot for δα for Pt100 samples
- 610: first set
- 620: second set
- 630: third set
- 650: vertical axis
- 666: zero
- 700: Boxplot for δα for Pt1000 samples
- 710: first set
- 720: second set
- 730: third set
- 750: vertical axis
- 777: zero
- 800: Boxplot for pulling force
- 850: vertical axis
- 900: Boxplot for pulling force
- 950: vertical axis

## Claims

1. A lead free composition (40) for manufacturing electrical components (1), comprising:
14.2 to 27.6% by weight B₂O₃;
3.6 to 8.1% by weight CaO;
8.1 to 13.6% by weight Al₂O₃;
2.8 to 9.5% by weight Na₂O; and
40.5 to 54.5% by weight SiO₂.

2. The lead free composition (40) of claim 1, comprising:
19.7 to 21.7% by weight B₂O₃.

3. The lead free composition (40) of claim 1 or 2, comprising:
3.6 to 7.0% by weight CaO.

4. The lead free composition (40) of any one of claim 1-3, comprising:
8.1 to 11.2% by weight Al₂O₃.

5. The lead free composition (40) of any one of claims 1-4, comprising:
4.3 to 8.7% by weight of the sum of BaO, CaO, and MgO.

6. The lead free composition (40) of any one of claims 1-5, comprising:
4.3 to 7.0% by weight of the sum of CaO and MgO.

7. The lead free composition (40) of any one of claims 1-6, comprising:
0.0 to 0.7% by weight MgO.

8. The lead free composition (40) of any one of claims 1-7, comprising:
0.0 to 0.9% by weight of Li₂O.

9. The lead free composition (40) of any one of claims 1-8, comprising:
less than 0.05% by weight of ZrO₂, Fe₂O₃ and SO₃⁻.

10. The lead free composition (40) of any one of claims 1-9, comprising:
0.0 to 1.9% by weight of CoO, CoAl₂O₄, or CoTiO₄.

11. The lead free composition (40) of any one of claims 1-10, comprising:
0 to 3.6 weight % K₂O;
0 to 4.4% by weight MgO;
0 to 1.7 weight % BaO;
0 to 0.3 weight % SrO; and
0 to 3.3 weight % ZnO.

12. A composite material (50), comprising:
50 to 99.5 % by weight of the lead free composition (40) of any one of claims 1 to 11 and
0.5-50% by weight glass- or ceramic- or glass-ceramic-powder with a melting temperature above 900°C.

13. The composite material (50) according to claim 12, wherein
the glass- or ceramic- or glass-ceramic-powder includes Al₂O₃, MgO, MgO-Al₂O₃-spinel, ZrO₂, BaO, or TiO₂ or a mixture thereof.

14. The lead free composition (40) according to any one of claims 1 to 11 or
the composite material (50) according to claim 12 or 13, wherein
the composition (40) or composite material (50) is stable at a working temperature of up to 600 °C; wherein optionally the composition (40) or composite (50) is stable at a working temperature of 650 °C for at least 100 hours.

15. A sensor (1) comprising:
a plurality of leads (10), and
a coating (20) which includes the lead free composition (40) of any one of claims 1 to 11 or the composite material (50) according to one of claims 12 or 13, or, according to claim 14, either the lead free composition (40) or the composite material (50); wherein
the sensor (1) is optionally a Pt-based temperature sensor; wherein
the leads (10) are optionally made from a non-precious metal or alloys thereof, such as nickel.
